# EUROPEAN PATENT APPLICATION

(11) **EP 4 240 047 A1**
(43) Date of publication of application: **06.09.2023**
(21) Application number: 22794382.6
(22) Date of filing: 16.03.2022
(51) Int. Cl.: H04W 24/02

(54) **METHOD AND APPARATUS FOR MINIMIZATION OF DRIVER TEST, AND ELECTRONIC DEVICE AND STORAGE MEDIUM**

(30) Priority: 28.04.2021 CN 202110468840
(71) Applicant: ZTE Corporation, Shenzhen, Guangdong 518057 (CN)
(72) Inventor: LI, Dapeng, Shenzhen, Guangdong 518057 (CN); GAO, Yin, Shenzhen, Guangdong 518057 (CN)
(74) Representative: Aipex B.V.
(86) International application number: PCT/CN2022/081146
(87) International publication number: WO 2022/227904

(57) **Abstract**

Provided are a method for minimization of driver test, an apparatus for minimization of driver test, an electronic device, and a storage medium. The method includes that: measurement configuration information is sent to a second network element, where the measurement configuration information is used for the second network element to perform minimization of driver test; and minimization of driver test is performed. According to the embodiments of the present application, a minimization of driver test in the network is implemented through the measurement configuration information, the accuracy of a driver test result may be enhanced, and thus the communication quality of a network node is improved.

## Description

The present application claims priority to Chinese Patent Application No. 202110468840.0, filed with the China National Intellectual Property Administration (CNIPA) on Apr. 28, 2021, the disclosure of which is incorporated herein by reference in its entirety.

### TECHNICAL FIELD

The present application relates to the field of wireless communications, and in particular to, a method for minimization of driver test, an apparatus for minimization of driver test, an electronic device, and a storage medium.

### BACKGROUND

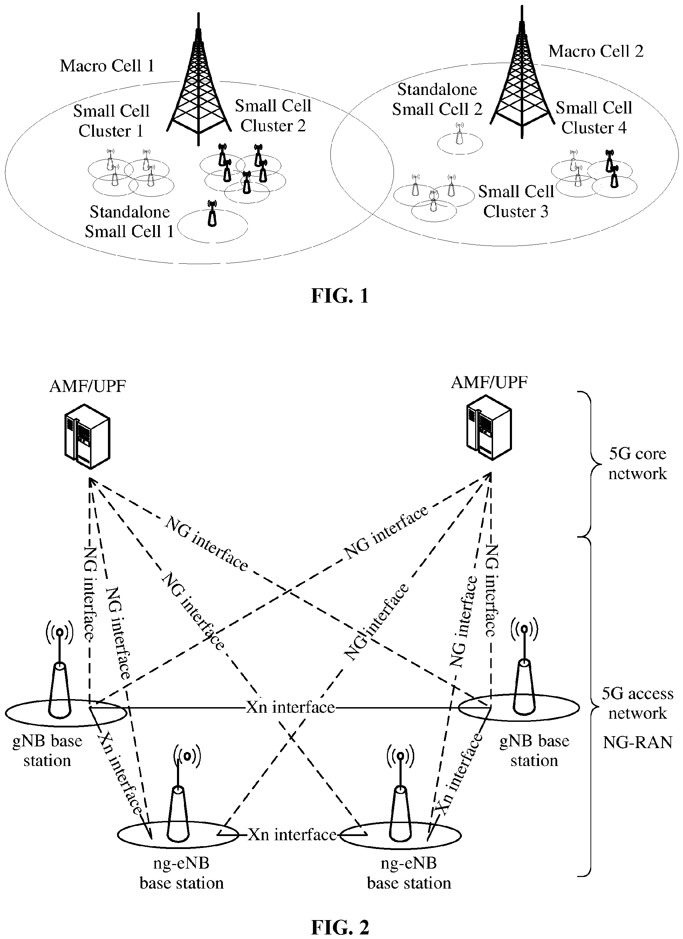

With the enhancement of terminal capabilities and network deployment, a terminal may be connected to multiple base stations for service. Referring to FIG. 1, multiple small cell clusters are allocated in a macro cell 1, the terminal may maintain a data connection with one or more small cell clusters while maintaining a data connection with the macro cell. Such architecture is referred to as a multi-connectivity architecture. Since multiple base stations may use different radio access technologies in this architecture, the multi-connectivity architecture in a new radio (NR) may also be referred to as multi-radio dual connectivity (MR-DC). When a MR-DC architecture is configured for the terminal by a base station, multiple types of bearers may be configured for the terminal by the base station. The diversity of types of bearers configured by the base station may result in a complex driver test situation. To reduce the cost and complexity of driver test for an operator, a third generation partnership project (3GPP) begins to introduce minimization of driver test (MDT) function in universal terrestrial radio access network (UTRAN). A core network (CN) corresponding to the UTRAN includes a home subscriber server (HSS), a mobile switching center (MCS) server, a general packet radio service (GPRS), a support node, and the like. The MDT function utilizes a user equipment (UE) to automatically collect measurement information and report the measurement information to a radio access network through control plane signaling and then report to a trace collection entity (TCE) of an operation and maintenance (OAM) system through the radio access network for network optimization. An MDT measurement is also defined in the NR, such as, an average throughput rate measurement of the terminal, also referred to as a M5 measurement; a message delay measurement, also referred to as a M6 measurement; and a message loss rate measurement, also referred to as a M7 measurement.

Since there are multiple types of bearers in the multi-connectivity architecture of the NR network, the types of bearers in a service node (SN) include SN terminated split bearer, SN terminated Master Cell group bearer, and SN terminated Secondary Cell group bearer. When the MDT measurement is performed on the above-described bearers of the terminal on the SN, a M5 measurement is taken as an example, the M5 measurement is performed at a radio link control (RLC) entity. For a master node (MN) terminated split bearer, the M5 measurement includes two parts: one part is a M5 measurement result at the RLC of the MN, and the other part is a M5 measurement result at the RLC of the SN. A management-based MDT measurement is triggered independently on both the MN and the SN. When the management-based MDT measurement is triggered on the SN, and a measurement and data acquisition cannot be performed on an RLC of the MN in the existing art.

### SUMMARY

The main objective of embodiments of the present application is to propose a method for minimization of driver test, an apparatus for minimization of driver test, an electronic device, and a storage medium, to implement a minimization of driver test in an NR network, implement the accurate control of a network node, and improve the accuracy of the driver test.

An embodiment of the present application provides a method for minimization of driver test. The method for minimization of driver test is applied to a first network element, and includes that: measurement configuration information is sent to a second network element, where the measurement configuration information is used for the second network element to perform minimization of driver test; and the minimization of driver test is performed.

An embodiment of the present application further provides a method for minimization of driver test. The method for minimization of driver test is applied to a second network element, and includes that: measurement configuration information sent by a first network element is received; and a minimization of driver test is performed according to the measurement configuration information.

An embodiment of the present application further provides an apparatus for minimization of driver test. The apparatus for minimization of driver test is applied to a first network element, and includes a configuration sending module and a driver test execution module. The configuration sending module is configured to send measurement configuration information to a second network element, where the measurement configuration information is used for the second network element to perform minimization of driver test. The driver test execution module is configured to perform the minimization of driver test.

An embodiment of the present application further provides an apparatus for minimization of driver test. The apparatus for minimization of driver test is applied to a second network element, and includes a configuration receiving module and a driver test processing module. The configuration receiving module is configured to receive measurement configuration information sent by a first network element. The driver test processing module is configured to perform a minimization of driver test according to the measurement configuration information.

An embodiment of the present application further provides a method for minimization of driver test. The method for minimization of driver test is applied to a third network element, and includes that: quality of experience (QOE) measurement assisted configuration information is sent to a fourth network element, so that the fourth network element performs a minimization of driver test.

An embodiment of the present application further provides a method for minimization of driver test. The method for minimization of driver test is applied to a fourth network element, and includes that: quality of experience (QOE) measurement assisted configuration information sent by a third network element is received; and a minimization of driver test is performed according to the QOE measurement assisted configuration information.

An embodiment of the present application further provides an apparatus for minimization of driver test. The apparatus for minimization of driver test is applied to a third network element, and includes a parameter sending module. The parameter sending module is configured to send quality of experience (QOE) measurement assisted configuration information to a fourth network element, so that the fourth network element performs a minimization of driver test.

An embodiment of the present application further provides an apparatus for minimization of driver test. The apparatus for minimization of driver test is applied to a fourth network element, and includes a parameter receiving module and a driver test processing module. The parameter receiving module is configured to receive quality of experience (QOE) measurement assisted configuration information sent by a third network element. The driver test processing module is configured to perform a minimization of driver test according to the QOE measurement assisted configuration information.

An embodiment of the present application further provides an electronic device. The electronic device includes one or more processors and a memory. The memory is configured to store one or more programs. The one or more programs, when executed by the one or more processors, cause the one or more processors to implement the method for minimization of driver test described in any one of the embodiments of the present application.

An embodiment of the present application further provides a computer-readable storage medium. The computer-readable storage medium stores a computer program thereon, where the computer program, when executed by a processor, implements the method for minimization of driver test described in any one of the embodiments of the present application.

According to the embodiments of the present application, the measurement configuration information is sent to the second network element through the first network element, the first network element and the second network element respectively perform the minimization of driver test, and a minimization of driver test in the network is implemented through the measurement configuration information, the accuracy of the driver test result may be enhanced, and thus the communication quality of the network node is improved.

### BRIEF DESCRIPTION OF DRAWINGS

FIG. 1 is a schematic diagram of a multi-connectivity architecture according to an embodiment of the present application;
FIG. 2 is a schematic diagram of a 5G structure according to an embodiment of the present application;
FIG. 3 is a schematic diagram of a protocol stack and bearer types at a multi-connection network side according to an embodiment of the present application;
FIG. 4 is a schematic diagram of a protocol stack and bearer types of a multi-connection network layer according to an embodiment of the present application;
FIG. 5 is a flowchart of a method for minimization of driver test according to an embodiment of the present application;
FIG. 6 is a flowchart of a method for minimization of driver test according to an embodiment of the present application;
FIG. 7 is a schematic diagram of a method for minimization of driver test according to an embodiment of the present application;
FIG. 8 is a schematic diagram of a method for minimization of driver test according to an embodiment of the present application;
FIG. 9 is a schematic diagram of a method for minimization of driver test according to an embodiment of the present application;
FIG. 10 is a schematic diagram of a method for minimization of driver test according to an embodiment of the present application;
FIG. 11 is a schematic diagram of a method for minimization of driver test according to an embodiment of the present application;
FIG. 12 is a schematic diagram of a method for minimization of driver test according to an embodiment of the present application;
FIG. 13 is a flowchart of a method for minimization of driver test according to an embodiment of the present application;
FIG. 14 is another flowchart of a method for minimization of driver test according to an embodiment of the present application;
FIG. 15 is a schematic diagram of a method for minimization of driver test according to an embodiment of the present application;
FIG. 16 is a schematic diagram of a method for minimization of driver test according to an embodiment of the present application;
FIG. 17 is a schematic diagram of a method for minimization of driver test according to an embodiment of the present application;
FIG. 18 is a schematic diagram of a method for minimization of driver test according to an embodiment of the present application;
FIG. 19 is a schematic structural diagram of an apparatus for minimization of driver test according to an embodiment of the present application;
FIG. 20 is a schematic structural diagram of an apparatus for minimization of driver test according to an embodiment of the present application;
FIG. 21 is a schematic structural diagram of an apparatus for minimization of driver test according to an embodiment of the present application;
FIG. 22 is a schematic structural diagram of an apparatus for minimization of driver test according to an embodiment of the present application; and
FIG. 23 is a schematic structural diagram of an electronic device according to an embodiment of the present application.

### DETAILED DESCRIPTION

It should be understood that specific embodiments described herein are merely illustrations rather than limitations on the present application.

In the following description, a suffix such as "module", "component" or "unit" used to denote an element is used merely to facilitate the description of the present application and has no unique meaning in itself. Therefore, the "module", "component" or "unit" may be used mixedly.

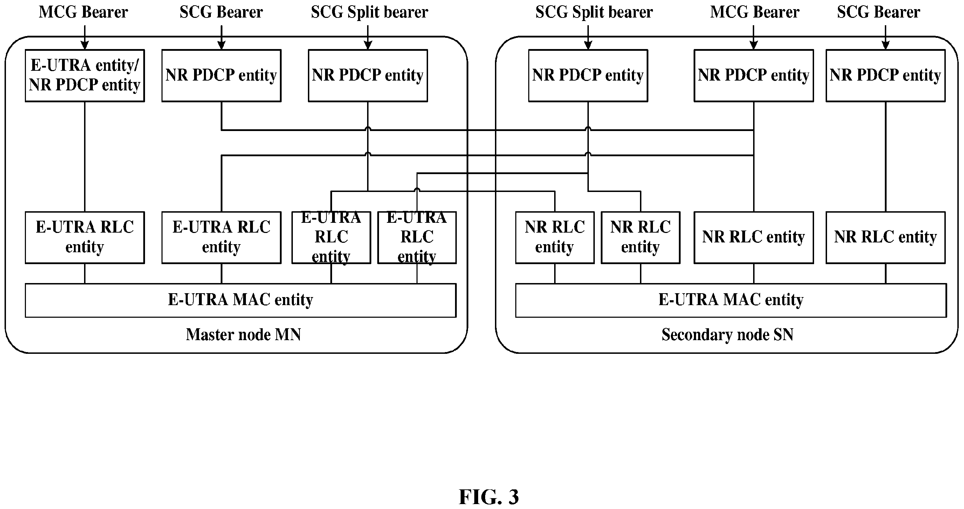

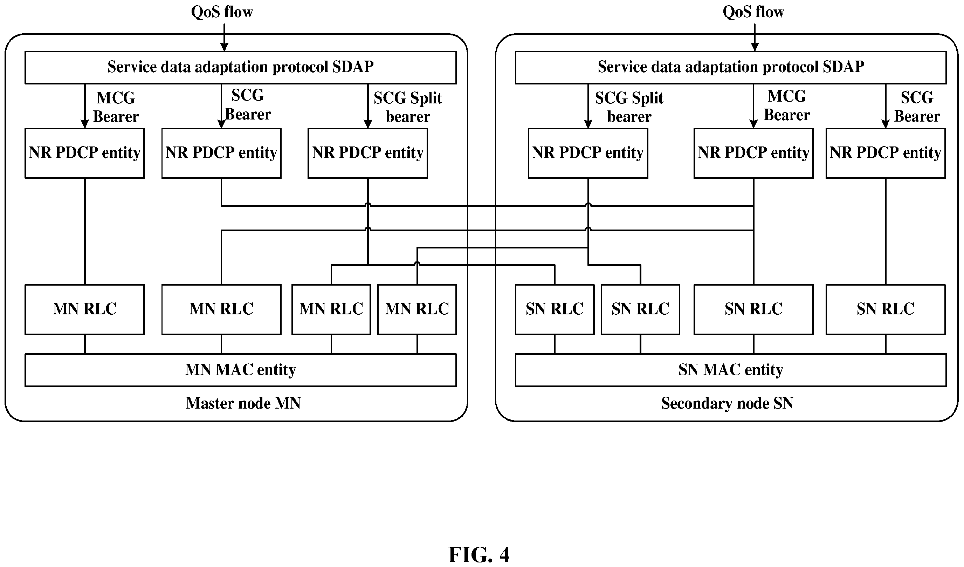

FIG. 2 is a schematic diagram of a 5G structure according to an embodiment of the present application. Referring to FIG. 2, a base station may be connected to an access and mobility management function (AMF) server or a user port function (UPF) server via an NG interface, and the base station may be connected another base station via an Xn interface. In a multi-connectivity architecture of a 5G network, multiple different types of bearers may be configured for a terminal. Referring to FIGS. 3 and 4, in which a fourth generation core network and a fifth generation core network are respectively taken as an example, the bearers include: a master cell group (MCG) bearer on a master node (MN) network element, such as a MN terminated MCG bearer; a secondary cell group (SCG) bearer on a MN network element, such as a MN terminated SCG bearer; a split bearer on a MN network element, such as a MN terminated split bearer; and bears on a secondary node (SN) network element, such as a SN terminated split bearer, a SN terminated MCG bearer, a SN terminated SCG bearer. Among which, four bearer types, i.e., the MN terminated SCG bearer, the MN terminated split bearer, the SN terminated split bearer, and the SN terminated SCG bearer use resources of two base stations. For example, the MN terminated split bearer contains a packet data convergence protocol (PDCP) entity on a MN node, contains a radio link control (RLC) multiple access channel (MAC) entity on the MN node and a PDCP entity on the SN node.

A 5G access network (such as, a next generation radio access network (NG-RAN)) is described in FIG. 2.

An evolved universal terrestrial radio access network (E-UTRA) is described in FIG. 3.

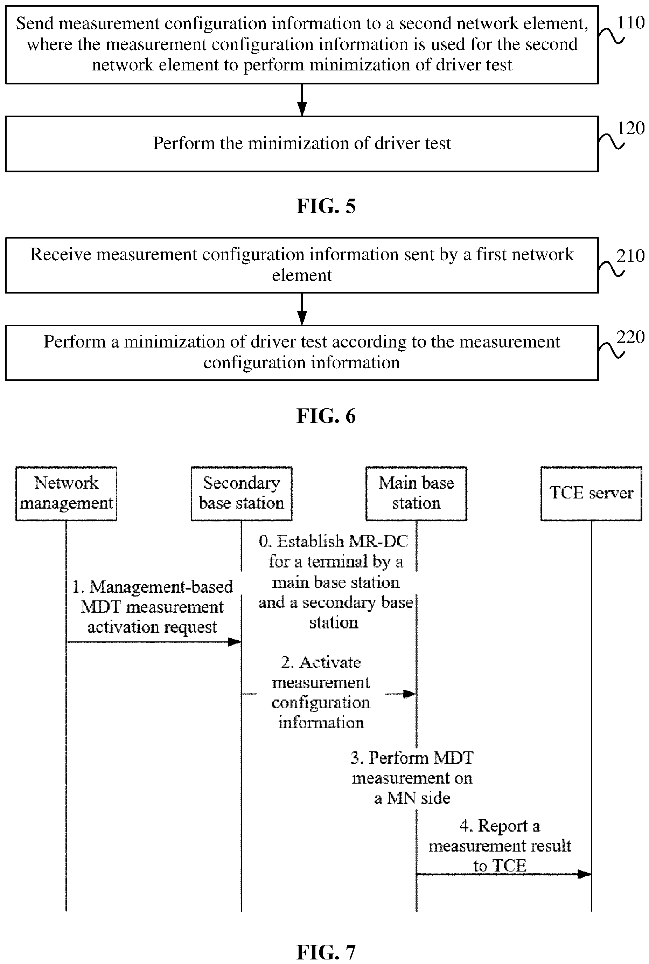

FIG. 5 is a flowchart of a method for minimization of driver test according to an embodiment of the present application. This embodiment is applicable to a situation that a service node triggers a master node to perform a minimization of driver test in an NR network. The method is executable by an apparatus for minimization of driver test in the embodiments of the present application. The apparatus for minimization of driver test is implemented in a form of software and/or hardware, and may generally be integrated in a first network element, where the first network element may be the service node in the NR network. Referring to FIG. 5, the method in the embodiment of the present application includes operations 110-120 as described below.

In operation 110, measurement configuration information is sent to a second network element, where the measurement configuration information is used for the second network element to perform minimization of driver test.

The measurement configuration information may be information configured for the minimization of driver test. The second network element may be triggered to perform the minimization of driver test through the measurement configuration information. The minimization of driver test may include: an average throughput measurement of a terminal (i.e., a M5 measurement), a message delay measurement (i.e., a M6 measurement), and a message loss rate measurement (i.e., a M7 measurement).

In the embodiments of the present application, the measurement configuration information may be sent to the second network element to trigger the second network element to perform the minimization of driver test, and it should be understood that the second network element may perform the minimization of driver test according to the measurement configuration information.

In operation120, the minimization of driver test is performed.

For example, the first network element may also perform the minimization of driver test and may perform at least one of the M5 measurement, the M6 measurement, or the M7 measurement. It should be understood that the first network element may perform a same measurement of the minimization of driver test with the second network element.

According to the embodiments of the present application, the measurement configuration information is sent to the second network element through the first network element, so that the first network element and the second network element respectively perform the minimization of driver test, the minimization of driver test is implemented in the NR network, the accuracy of the driver test is improved, and the accurate control of a network node is achieved.

In an example embodiment, the measurement configuration information includes at least one of following parameters: an activated or deactivated measurement trace identifier; an activated or deactivated trace reference identifier; an activated or deactivated trace recording session reference identifier; a trace collection entity internet protocol address or a a trace collection entity uniform resource identifier; a terminal identifier allocated by the first network element; a terminal identifier allocated by the second network element; or minimization of driver test configuration.

In the embodiments of the present application, the measurement configuration information may include an activated measurement trace identifier, or a deactivated measurement trace identifier, the measurement trace identifier (Trace ID) may include two pieces of information, one of the two pieces of information may be a trace reference identifier, the other one of the two pieces of information may be a trace recording session reference identifier. The measurement configuration information may include only one of the trace reference identifier or the trace recording session reference identifier for activating or deactivating. The measurement configuration information may also include a trace collection entity IP address or a trace collection entity uniform resource identifier (Entity URI). The measurement configuration information may also include a terminal identifier allocated by the first network element and/or the second network element. For example, the terminal identifier allocated by the first network element and/or the second network element may be a terminal identifier allocated by a network element on a MN side, M-NG-RAN node UE XnAP ID, or a terminal identifier allocated by a network element on a SN side, S-NG-RAN node UE XnAP ID. The measurement configuration information may also include the minimization of driver test configuration.

In an example embodiment, the minimization of driver test configuration in the method includes at least one of following parameters: a measurement range, or a network slicing list; uplink data volume measurement configuration and/or downlink data volume measurement configuration; average throughput rate measurement configuration; message delay measurement configuration; message loss rate measurement configuration; or a type of minimization of driver test measurement configuration. The measurement range includes at least one of: a cell list, a tracking area list, a tracking area identifier.

In an example embodiment, the method further includes that: a measurement result of the minimization of driver test is sent to a trace collection entity (TCE), where the measurement result of the minimization of driver test is used for the TCE to determine evaluation of the measurement result of the minimization of driver test for a terminal.

In the embodiments of the present application, the first network element may send the measurement result of the minimization of driver test to the trace collection entity (TCE), where the measurement result of the minimization of driver test is used for the TCE to determine evaluation of the measurement result of the minimization of driver test. It should be understood that the TCE may also acquire a measurement result of the minimization of driver test of the second network element. The TCE is configured to determine the evaluation of the measurement result of the minimization of driver test by synthesizing the result of the minimization of driver test of the first network element and the result of the minimization of driver test of the second network element.

FIG. 6 is a flowchart of a method for minimization of driver test according to an embodiment of the present application. This embodiment is applicable to a situation that a service node triggers a master node to perform a minimization of driver test in an NR network. The method is executable by an apparatus for minimization of driver test in the embodiments of the present application, the apparatus is implemented in a form of software and/or hardware, and may generally be integrated in a second network element. The second network element may be a master node in the NR network. Referring to FIG. 6, the method in the embodiment of the present application includes operations 210-220 as described below.

In operation 210, measurement configuration information sent by a first network element is received.

In the embodiments of the present application, the second network element may receive the measurement configuration information sent by the first network element.

In operation220, a minimization of driver test is performed according to the measurement configuration information.

For example, the minimization of driver test may be performed according to the measurement configuration information, and the measurements of the minimization of driver test may include an average throughput measurement of a terminal (i.e., a M5 measurement), a message delay measurement (i.e., a M6 measurement), and a message loss rate measurement (i.e., a M7 measurement).

According to the embodiments of the present application, the measurement configuration information sent by the first network element is received, and the minimization of driver test is performed according to the measurement configuration information, so that the execution of the minimization of driver test in the NR network is achieved, and the accuracy of the driver test control of a network node is improved.

In an example embodiment, the measurement configuration information in the method includes at least one of following parameters: an activated or deactivated measurement trace identifier; an activated or deactivated trace reference identifier; an activated or deactivated trace recording session reference identifier; a trace collection entity internet protocol address or a trace collection entity uniform resource identifier; a terminal identifier allocated by a network element on a master node side; a terminal identifier allocated by a network element on a service node side; or minimization of driver test configuration.

In an example embodiment, the minimization of driver test configuration includes at least one of following parameters: a measurement range, uplink data volume measurement configuration and/or downlink data volume measurement configuration, average throughput rate measurement configuration, message delay measurement configuration, message loss rate measurement configuration, or, a type of minimization of driver test measurement configuration. The measurement range includes at least one of: a cell list, a tracking area list, a tracking area identifier, or a network slicing list.

In an example embodiment, the method further includes that: a measurement result of the minimization of driver test is sent to a trace collection entity (TCE), where the measurement result of the minimization of driver test is used for the TCE to determine evaluation of the measurement result of the minimization of driver test for a terminal.

In the embodiments of the present application, the second network element may send the measurement result of the minimization of driver test to the trace collection entity (TCE), where the measurement result of the minimization of driver test is used for the TCE to determine evaluation of the measurement result of the minimization of driver test. It should be understood that the TCE may also acquire a measurement result of the minimization of driver test of the first network element. The TCE is configured to determine evaluation of the measurement result of the minimization of driver test by synthesizing the result of the minimization of driver test of the first network element and the result of the minimization of driver test of the second network element.

In an example embodiment, the SN network element triggering a management-based MDT measurement is used as an example, where the measurement objects measured at this MDT are M5 and M7. FIG. 7 is a schematic diagram of a method for minimization of driver test according to an embodiment of the present application. Referring to FIG. 7, a SN base station activating an MDT for a SN terminated MCG bearer may include the following operations 0-3.

In operation 0, a main base station and a secondary base station establish a MR-DC for a terminal. In the embodiments of the present application, the main base station sends an S-NODE ADDTITION REQUSET message through an Xn interface or an X2 interface. The S-NODE ADDTITION REQUSET message carries information about SN terminated MCG bearer, and the SN sends an S-NODE-RECONFIGURATION COMPLETE message to an MN after the SN has been configured. The MN and the SN may establish one SN terminated MCG bearer for a terminal.

In operation 1, a network management of the SN sends a management-based MDT measurement activation request to a secondary base station. For example, the network management of the SN configures different management-based MDT measurement activation request configurations for the SN and the MN, respectively, due to that radio access technologies used by the SN and the MN may be different. Referring to FIG. 4, both MN and SN in MR-DC use NR, while referring to FIG. 3, the MN in the MR-DC uses EUTRA, and the SN in the MR-DC uses the NR. In a case as shown in FIG. 3, the SN cannot provide MDT measurement configuration for the MN due to a fact that the SN uses a radio access technology different from that used by the MN, and in this case, the network management of the SN is configured to provide both measurement activation request configuration of NR-type and measurement activation request configuration of EUTRA-type for the SN.

An interface between a base station and the network management is used for the configuration, and the measurement configuration information configured by the SN may include following parameters:
1. a measurement trace identifier (Trace ID) needing to be activated (including a trace reference identifier, and a trace recording session reference identifier);
2. a trace collection entity IP address or a trace collection entity uniform resource identifier (URI); and
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration; and
   4) a type of MDT measurement configuration, such as NR, EUTRA.

In operation 2, the secondary base station sends activation information for measurement configuration to the main base station. In the embodiments of the present application, after a management-based MDT measurement request is received, the secondary base station selects a terminal satisfying the condition to perform a measurement. When the secondary base station selects a terminal, it is determined that one radio bearer of the terminal belongs to a SN terminated MCG bearer type, that is, a RLC of this one radio bearer is in a MN network element. Measurement quantities required to be measured by the SN network management in this example are M5 and M7, both measurements are performed at the RLC entity, and both measurements are performed by the MN in this example. The secondary base station will thus send the activation information for measurement configuration to the main base station, to initiate the main base station to measure this radio access bearer.

An interface message used to convey the activation information for measurement configuration may be a new XnAP or X2AP message, such as an S-NG-RAN node initiated Trace start message. An existing message may also be used, such as S-NODE MODIFICATION REQUIRED message, in which the activation information for measurement configuration is carried.

The measurement configuration information may include following parameters:
1. a measurement trace identifier (Trace ID) needing to be activated (including a trace reference identifier, and a trace recording session reference identifier);
2. a trace collection entity IP address or a trace collection entity uniform resource identifier (URI); and
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration; and
   4) a type of MDT measurement configuration, such as NR, EUTRA.

If the MN uses NR to access, the SN transmits MDT measurement configuration information of NR-type obtained in operation 2 to the MN. If the MN uses EUTRA to access, the SN sends MDT measurement configuration information of EUTRA-type obtained in operation 2 to the MN.

In operation 3, the main base station performs an MDT measurement on a MN side. For example, after the main base station receives the message in the operation 2, the MN side performs the MDT measurement on the UE, for example, by using a TS38.314 protocol or a TS 28.552 protocol. The MN network element performs a measurement on M5, M7.

In operation 4, the main base station reports a measurement result to TCE. For example, the MN sends the measurement report on the MN to the TCE according to information about the trace collection entity obtained in the operation 2, and the TCE obtains an evaluation of a measurement result of the terminal on the MR-DC according to an MDT measurement result on the MN network element.

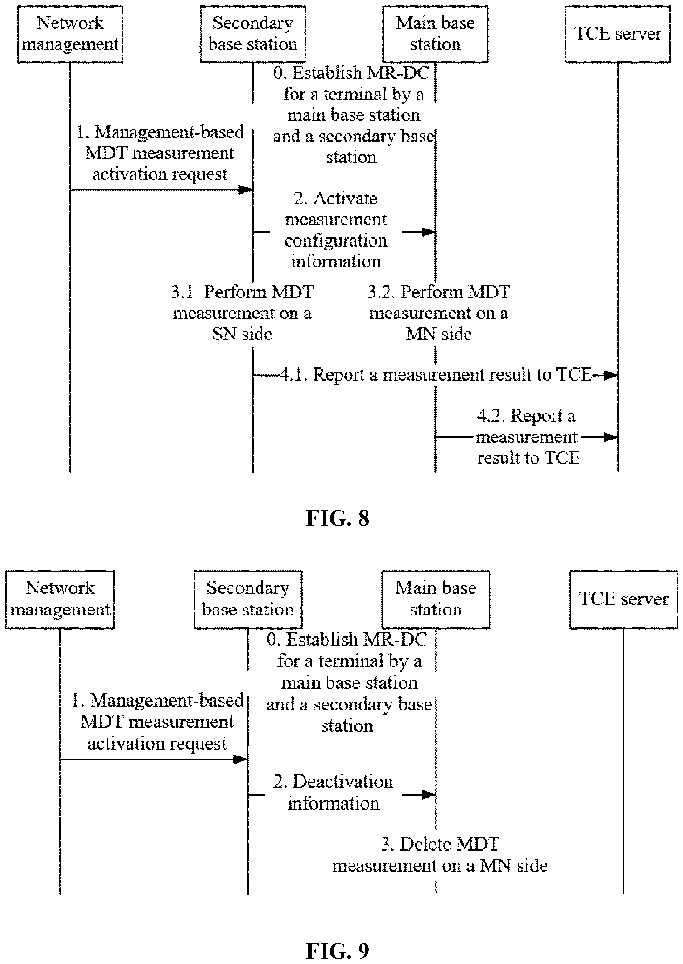

In an example embodiment, the SN network element triggering a management-based MDT measurement is used as an example, where the measurement object measured at this MDT is M6. FIG. 8 is a schematic diagram of a method for minimization of driver test according to an embodiment of the present application, and referring to FIG. 8, a SN base station activating a management-based MDT measurement for a SN terminated MCG bearer may include following operations.

In operation 0, a main base station and a secondary base station establish a MR-DC for a terminal. In the embodiments of the present application, the main base station sends an S-NODE ADDTITION REQUSET message through an Xn interface or an X2 interface, the message carries information about SN terminated MCG bearer, and the SN sends an S-NODE-RECONFIGURATION COMPLETE message to an MN after the SN has been configured. The MN and the SN may establish one SN terminated MCG bearer for a terminal.

In operation 1, a network management of the SN sends a management-based MDT measurement activation request to the secondary base station. For example, the network management of the SN configures different management-based MDT measurement activation request configurations for the SN and the MN, respectively, due to that radio access technologies used by the SN and the MN may be different. Referring to FIG. 4, both MN and SN in MR-DC use NR, while referring to FIG. 3, the MN in the MR-DC uses EUTRA and the SN in the MR-DC uses the NR. In a case as shown in FIG. 3, the SN cannot provide MDT measurement configuration for the MN due to a fact that the SN uses a radio access technology different from that used by the MN. In this case, the network management of the SN provides both measurement activation request configuration of NR-type and measurement activation request configuration of EUTRA-type for the SN.

An interface between a base station and the network management is used for the configuration, and the measurement configuration information configured by the SN may include following parameters:
1. a measurement trace identifier (Trace ID) needing to be activated (including two parts, one part is a trace reference identifier, and one part is a trace recording session reference identifier);
2. a trace collection entity IP address, or a trace collection entity uniform resource identifier (URI);
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M6 measurement configuration; and
   3) a type of MDT measurement configuration, such as NR, EUTRA.

In operation 2, the secondary base station sends activation information for measurement configuration to the main base station. For example, after a management-based MDT measurement request is received, the secondary base station selects a terminal satisfying the condition to perform a measurement. When the secondary base station selects a terminal, it is determined that one radio bearer of the terminal belongs to a SN terminated MCG bearer type, that is, a RLC of this one radio bearer is in a MN network element. A measurement required to be measured by the SN network management in this example is M6, which requires both the MN side and the SN side to initiate the measurement. For example, a latency on a PDCP layer and a transmission latency between the SN to the MN need to be calculated on the SN side, an air interface latency and a user plane processing latency on the MN side need to be calculated on the MN side. The secondary base station sends the activation information for measurement configuration to the main base station, to initiate the main base station to measure this radio access bearer.

An interface message used to transmit the activation information for measurement configuration may be a new XnAP or X2AP message, such as an S-NG-RAN node initiated Trace start message, or may be an existing message, such as S-NODE MODIFICATION REQUIRED message. The activation information for measurement configuration is carried in the above messages.

The measurement configuration includes following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI);
3. a UE identifier (such as, M-NG-RAN node UE XnAP ID) allocated by the network element on the MN side;
4. a UE identifier (such as, S-NG-RAN node UE XnAP ID) allocated by the network element on the SN side
5. MDT measurement configuration. The MDT measurement configuration includes following information:
   1) a measurement range, where the measurement range includes: a cell list, a tracking area list (TA list), a tracking area identifier list (TAI list), or a network slicing list;
   2) M6 measurement configuration;
   3) a type of MDT measurement configuration, such as NR, EUTRA.

If the MN is accessed by using the NR, the SN transmits MDT measurement configuration information of NR-type obtained in operation2 to the MN. If the MN uses the EUTRA, the SN sends MDT measurement configuration information of EUTRA-type obtained in operation2 to the MN.

In operation 3.1, the secondary base station performs the MDT measurement on the SN side, and the SN performs an MDT measurement for the UE according to the existing art. For example, the SN performs an MDT measurement for the UE by using a TS38.314 protocol or a TS 28.552 protocol. The SN network element performs a measurement on M6.

In operation 3.2, the main base station performs an MDT measurement on a MN side; after the MN receives the message in the operation 2, the MN side performs the MDT measurement on the UE according to the existing art. For example, the MN side performs the MDT measurement on the UE by using a TS38.314 protocol or a TS 28.552 protocol. The MN network element performs a measurement on M6.

In operation 4.1 and operation 4.2, the main base station and the secondary base station reports measurement results to TCE, respectively. The MN sends the measurement report on the MN to the TCE according to the information about the trace collection entity obtained in the operation 2. The SN sends a measurement report on the SN to the TCE according to the information about the trace collection entity obtained in the operation 1.

The TCE obtains an evaluation of a measurement result of the terminal on the MR-DC according to an MDT measurement result on the SN network element and the MN network element.

In an example embodiment, the SN network element triggers a management-based MDT measurement, and the measurement objects herein are M5 and M7. FIG. 8 is a schematic diagram of a method for minimization of driver test according to an embodiment of the present application. Referring to FIG. 8, a SN base station being activated a management-based MDT procedure for a SN terminated split bearer may include the following operations.

In operation 0, a main base station and a secondary base station establish a MR-DC for a terminal.

In the embodiments of the present application, the main base station sends an S-NODE ADDTITION REQUSET message through an Xn interface or an X2 interface, the message carries information about the SN terminated split bearer, and the SN sends an S-NODE-RECONFIGURATION COMPLETE message to an MN after the SN has been configured. The MN and the SN may establish one SN terminated split bearer for a terminal.

In operation 1, a network management of the SN sends a management-based MDT measurement activation request to the secondary base station.

For example, the network management of the SN configures different configurations for the SN and the MN respectively for management-based MDT measurement activation requests, due to that radio access technologies used by the SN and the MN may be different. Referring to FIG. 4, both MN and SN in MR-DC use NR, while referring to FIG. 3, the MN in the MR-DC uses EUTRA and the SN uses the NR. In a case as shown in FIG. 3, the SN cannot provide MDT measurement configuration for the MN due to a fact that the SN uses a radio access technology different from that used by the MN. The network management of the SN needs to provide both measurement activation request configuration of NR-type and measurement activation request configuration of EUTRA-type for the SN.

An interface between a base station and the network management is used for the configuration, and the measurement configuration information configured by the SN may include following parameters:
1. a measurement trace identifier (Trace ID) needing to be activated (including two parts, one part is a trace reference identifier, and one part is a trace recording session reference identifier);
2. a trace collection entity IP address, or a trace collection entity uniform resource identifier (URI);
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration; and
   4) a type of MDT measurement configuration, such as NR, EUTRA.

In operation 2, the secondary base station sends activation information for measurement configuration to the main base station. After a management-based MDT measurement request is received, the secondary base station selects a terminal satisfying the condition to perform a measurement. When the secondary base station selects a terminal, it is determined that one radio bearer of the terminal is a type of SN terminated split bearer, that is, this radio bearer includes two RLC entities, i.e., one of the two RLC entities is at the MN network element and the other one of the two RLC entities is at the SN. Measurements required to be performed by the SN network management in this example are M5 and M7, which require both the MN side and the SN side to initiate the measurement of the RLC entity. For example, the RLC on the SN side needs to calculate M5 and M7 on the SN side, and the RLC on the MN side needs to calculate M5 and M7 on the MN side. The secondary base station will thus send the activation information for measurement configuration to the main base station, to initiate the main base station to measure this radio access bearer. The interface message used for transmitting the activation information for measurement configuration may be a new XnAP or X2AP message, such as an S-NG-RAN node initiated Trace start message, or may be an existing message, such as an S-NODE MODIFICATION REQUIRED message. The activation information for measurement configuration is carried. The measurement configuration includes following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI);
3. a UE identifier (such as, M-NG-RAN node UE XnAP ID) allocated by the network element on the MN side;
4. a UE identifier (such as, S-NG-RAN node UE XnAP ID) allocated by the network element on the SN side; and
5. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration;
   4) a type of MDT measurement configuration, such as NR, EUTRA.

If the MN is accessed by using the NR, the SN transmits MDT measurement configuration information of NR-type obtained in operation 2 to the MN. If the MN uses EUTRA, the SN sends MDT measurement configuration information of EUTRA-type obtained in operation 2 to the MN.

In operation 3.1, the secondary base station performs the MDT measurement on the SN side. The SN performs an MDT measurement for the UE according to the existing art, for example, by using a TS38.314 protocol or a TS 28.552 protocol. The SN network element performs a measurement on M5 and M7.

In operation 3.2, the main base station performs an MDT measurement on a MN side. After the MN receives the message in the operation 2, the MN side performs the MDT measurement on the UE, for example, by using a TS38.314 protocol or a TS 28.552 protocol. The MN network element performs a measurement on M5 and M7.

In operation 4.1 and operation 4.2, the main base station and the secondary base station reports measurement results to TCE, respectively, the MN sends the measurement report on the MN to the TCE according to the information about the trace collection entity obtained in the operation 2. The SN sends a measurement report on the SN to the TCE according to the information about the trace collection entity obtained in the operation 1.

In an embodiment, the TCE obtains an evaluation of a measurement result of the terminal on the MR-DC according to an MDT measurement result on the SN network element and the MN network element.

In an example embodiment, the SN network element being triggered a management-based MDT measurement is used as an example, where a measurement object measured at this MDT is M6. Referring to FIG. 8, a SN base station activating a management-based MDT measurement for a SN terminated split bearer is used as an example, and the MDT procedure may include the following operations.

In operation 0, a main base station and a secondary base station establish a MR-DC for a terminal. In the embodiments of the present application, the main base station sends an S-NODE ADDTITION REQUSET message through an Xn interface or an X2 interface, and the S-NODE ADDTITION REQUSET message carries SN terminated split bearer information. The SN sends an S-NODE-RECONFIGURATION COMPLETE message to the MN after the SN has been configured. The MN and the SN may establish one SN terminated split bearer for a terminal.

In operation 1, a network management of the SN sends a management-based MDT measurement activation request to the secondary base station. For example, the network management of the SN configures different configurations for management-based MDT measurement activation requests of the SN and the MN, respectively, due to that radio access technologies used by the SN and the MN may be different. Referring to FIG. 4, both MN and SN in MR-DC use NR, while referring to FIG. 3, the MN in the MR-DC uses EUTRA and the SN uses the NR. In a case as shown in FIG. 3, the SN cannot provide MDT measurement configuration for the MN due to a fact that the SN uses a radio access technology different from that used by the MN. The network management of the SN needs to provide both measurement activation request configuration of NR-type and measurement activation request configuration of EUTRA-type for the SN.

An interface between a base station and the network management is used for the configuration, and the measurement configuration information configured by the SN may include following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI);
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M6 measurement configuration; and
   3) a type of MDT measurement configuration, such as NR, EUTRA.

In operation 2, the secondary base station sends activation information for measurement configuration to the main base station.

For example, after a management-based MDT measurement request is received, the secondary base station selects a terminal satisfying the condition to perform a measurement. When the secondary base station selects a terminal, it is determined that one radio bearer of the terminal belongs to a SN terminated split bearer type, that is, a RLC of this one radio bearer is in a MN network element. A measurement required to be measured by the SN network management in this embodiment is M6, and it requires both the MN side and the SN side to initiate the measurement simultaneously. For example, a latency on a PDCP layer and a transmission latency between the SN to the MN need to be calculated on the SN side, an air interface latency and a user plane processing latency on the MN side need to be calculated on the MN side. The secondary base station will send the activation information for measurement configuration to the main base station, to initiate the main base station to measure this radio access bearer.

An interface message used to transmit the activation information for measurement configuration may be a new XnAP or X2AP message, such as an S-NG-RAN node initiated Trace start message, or may be an existing message, such as S-NODE MODIFICATION REQUIRED message. The activation information for measurement configuration is carried in the above messages.

The measurement configuration includes following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI);
3. a UE identifier (such as, M-NG-RAN node UE XnAP ID) allocated by the network element on the MN side;
4. a UE identifier (such as, S-NG-RAN node UE XnAP ID) allocated by the network element on the SN side
5. MDT measurement configuration. The MDT measurement configuration includes following information:
   1) a measurement range, where the measurement range includes: a cell list, a tracking area list (TA list), a tracking area identifier list (TAI list), or a network slicing list;
   2) M6 measurement configuration;
   3) a type of MDT measurement configuration, such as NR, EUTRA.

If the MN uses NR to access, the SN transmits MDT measurement configuration information of NR-type obtained in operation 2 to the MN. If the MN uses EUTRA to access, the SN sends MDT measurement configuration information of EUTRA-type obtained in operation 2 to the MN.

In operation 3.1, the secondary base station performs the MDT measurement on the SN side. The SN performs an MDT measurement for the UE according to the existing art, for example, by using a TS38.314 protocol or a TS 28.552 protocol. The SN network element performs a measurement on M6. The SN network element also obtains a measurement result of the RLC.

In operation 3.2, the main base station performs an MDT measurement on a MN side; after the MN receives the message in the operation 2, the MN side performs the MDT measurement on the UE according to the existing art, for example, by using a TS38.314 protocol or a TS 28.552 protocol. The MN network element performs a measurement on M6.

In operation 4.1 and operation 4.2, the main base station and the secondary base station reports measurement results to TCE, respectively. The MN sends the measurement report on the MN to the TCE according to the information about trace collection entity obtained in the operation 2. The SN sends a measurement report on the SN to the TCE according to information about the trace collection entity obtained in the operation 1.

The TCE obtains an evaluation of a measurement result of the terminal on the MR-DC according to an MDT measurement result on the SN network element and the MN network element.

In an example embodiment, a SN base station deactivates an MDT measurement under a MR-DC architecture. FIG. 9 is a schematic diagram of a method for minimization of driver test according to an embodiment of the present application, and referring to FIG. 9, the MDT measurement includes the following operations.

In operation 0, a main base station and a secondary base station establish a MR-DC for a terminal, and the SN sends the activation information for measurement configuration to the MN.

In operation 1, the network management sends a management-based MDT measurement deactivation request to the secondary base station, and an interface between a base station and the network management is used for the configuration. The measurement configuration includes following parameters:
1. a measurement trace identifier (Trace ID) (including a trace reference identifier, and a trace recording session reference identifier) needing to be deactivated.

In operation 2, the secondary base station sends deactivation information to the main base station. After receiving the message in the operation 1, the secondary base station determines that the measurement includes a measurement on a MN side, and therefore, the secondary base station sends the deactivation information to the main base station to terminate the MDT measurement on the MN side. The deactivation information includes following information:
1. a measurement trace identifier (Trace ID) (including a trace reference identifier, and a trace recording session reference identifier) needing to be deactivated;
2. a UE identifier (such as, M-NG-RAN node UE XnAP ID) allocated by the network element on the MN side; and
3. a UE identifier (such as, S-NG-RAN node UE XnAP ID) allocated by the network element on the SN side.

In operation 3, the main base station deletes the MDT measurement on the MN side.

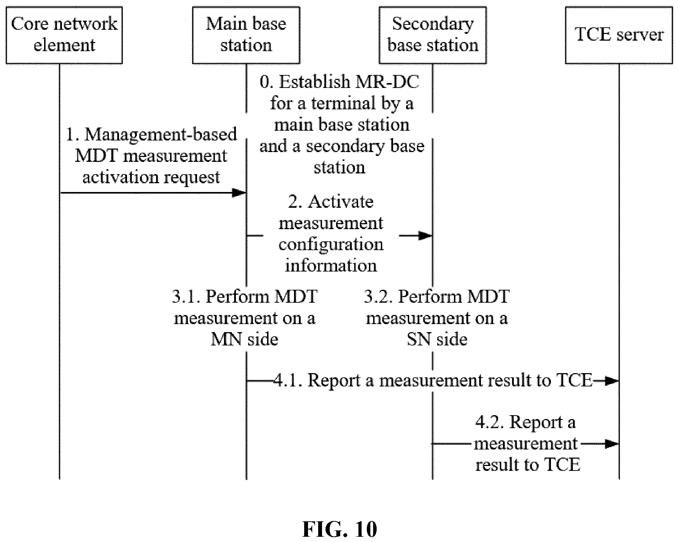

In an example embodiment, a MN base station activates a signaling-based MDT measurement for a MN terminated bearer. FIG. 10 is a schematic diagram of a method for minimization of driver test according to an embodiment of the present application, and referring to FIG. 10, the MDT measurement includes following operations.

In operation 0, a main base station and a secondary base station establish a MR-DC for a terminal, where established bearers include a MN terminated split bearer and a MN terminated SCG bearer.

In operation 1, a core network element sends a signaling-based MDT measurement activation request to the main base station. An interface between a base station and the network management is used for the configuration, and the measurement configuration includes following parameters:
1. a measurement trace identifier (Trace ID) (including a trace reference identifier, and a trace recording session reference identifier) needing to be activated;
2. a trace collection entity IP address, or, a trace collection entity uniform resource identifier (URI);
3. a UE identifier allocated by the network element on the MN side;
4. MDT configuration, where the MDT measurement configuration includes following information:
   1) a measurement range, where the measurement range includes: a cell list, a tracking area list (TA list), a tracking area identifier list (TAI list), or a network slicing list;
   2) M4 measurement configuration;
   3) M5 measurement configuration;
   4) M6 measurement configuration;
   5) M7 measurement configuration; and
   6) a type of MDT measurement configuration, such as NR, EUTRA.

In operation 2, the main base station sends activation information for measurement configuration to the secondary base station. Bearers as the MN terminated split bearer and the MN terminated SCG bearer need to be measured on RLC on the SN, therefore, the main base station needs to send the activation information for measurement configuration to the secondary base station. The activation information for measurement configuration is sent in an existing message such as a Trace start message, or, in a new XNAP or X2AP message such as an M-NG-RAN node initiated Trace start message.

The activation information for measurement configuration includes following information:
1. a measurement trace identifier (Trace ID) (including a trace reference identifier, and a trace recording session reference identifier) needing to be activated;
2. a trace collection entity IP address, or, a trace collection entity uniform resource identifier (URI);
3. a UE identifier allocated by the network element on the MN side;
4. a UE identifier allocated by the network element on the SN side;
5. MDT configuration, where the MDT measurement configuration includes following information:
   1) a measurement range, where the measurement range includes following information: a cell list, a tracking area list (TA list), a tracking area identifier list (TAI list), or a network slicing list;
   2) M5 measurement configuration;
   3) M6 measurement configuration;
   4) M7 measurement configuration; and
   5) a type of MDT measurement configuration, such as NR, EUTRA.

In operation 3.1, the main base station performs an MDT measurement on a MN side; the MN side performs the MDT measurement on the UE according to the existing art, for example, by using a TS38.314 protocol or a TS 28.552 protocol. The MN network element performs a measurement on M4, M5, M6, M7.

In operation 3.2, the secondary base station performs the MDT measurement on the SN side; the SN performs an MDT measurement for the UE according to the existing art, for example, by using a TS38.314 protocol or a TS 28.552 protocol. The SN network element performs a measurement on M5, M6, M7.

In operations 4.1 and 4.2, the main base station and the secondary base station reports measurement results to TCE, respectively; and the MN and the SN send measurement reports to the TCE according to the existing art, respectively.

In an embodiment, the TCE obtains an evaluation of a measurement result of the terminal on the MR-DC according to an MDT measurement result on the SN network element and the MN network element.

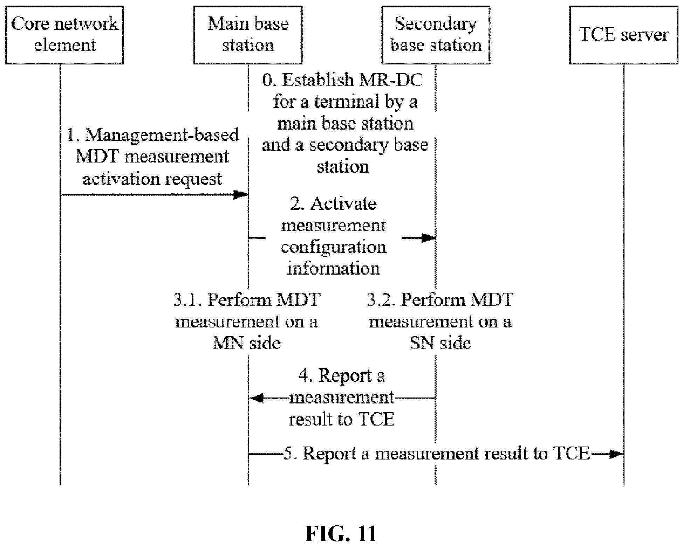

In an example embodiment, a measurement report of an MDT measurement is focused on being reported after a main base station node. FIG. 11 is a schematic diagram of a method for minimization of driver test according to an embodiment of the present application, and referring to FIG. 11, the MDT measurement includes following operations.

In operation 0, a main base station and a secondary base station establish a MR-DC for a terminal, where established bearers include a MN terminated split bearer, a MN terminated SCG bearer.

In operation 1, a core network element sends a signaling-based MDT measurement activation request to the main base station. An interface between a base station and the network management is used for the configuration, and the measurement configuration includes following parameters:
1. a measurement trace identifier (Trace ID) (including a trace reference identifier, and a trace recording session reference identifier) needing to be activated;
2. a trace collection entity IP address, or, trace collection entity uniform resource identifier (URI);
3. a UE identifier allocated by the network element on the MN side;
4. MDT configuration, where the MDT measurement configuration includes following information:
   1) a measurement range, where the measurement range includes: a cell list, a tracking area list (TA list), a tracking area identifier list (TAI list), or a network slicing list;
   2) M4 measurement configuration;
   3) M5 measurement configuration;
   4) M6 measurement configuration;
   5) M7 measurement configuration; and
   6) a type of MDT measurement configuration, such as NR, EUTRA.

In operation 2, the main base station sends activation information for measurement configuration to the secondary base station; where bearers including the MN terminated split bearer and the MN terminated SCG bearer need to be measured on RLC on the SN, therefore, the main base station needs to send the activation information for measurement configuration to the secondary base station. An existing Trace start message, as well as a new XNAP or X2AP message, such as an M-NG-RAN node initiated Trace start message, may be used to send the activation information for measurement configuration.

The activation information for measurement configuration includes following information:
1. a measurement trace identifier (Trace ID) (including a trace reference identifier, and a trace recording session reference identifier) needing to be activated;
2. a trace collection entity IP address, or, a trace collection entity uniform resource identifier (URI);
3. a UE identifier allocated by the network element on the MN side;
4. a UE identifier allocated by the network element on the SN side; and
5. MDT configuration, where the MDT measurement configuration includes following information:
   1) a measurement range, where the measurement range includes following information: a cell list, a tracking area list (TA list), a tracking area identifier list (TAI list), or a network slicing list;
   2) M5 measurement configuration;
   3) M6 measurement configuration;
   4) M7 measurement configuration; and
   5) a type of MDT measurement configuration, such as NR, EUTRA.

In operation 3.1, the main base station performs an MDT measurement on a MN side; the MN side performs the MDT measurement on the UE according to the existing art, for example, by using a TS38.314 protocol or a TS 28.552 protocol. The MN network element performs a measurement on M4, M5, M6, M7.

In operation 3.2, the secondary base station performs the MDT measurement on the SN side; the SN performs an MDT measurement for the UE according to the existing art, for example, by using a TS38.314 protocol or a TS 28.552 protocol. The SN network element performs a measurement on M5, M6, M7.

In operation 4, the secondary base station sends a measurement result to the main base station.

The measurement result may be sent by using an existing message. For example, a measurement result on the SN side is carried in an existing S-NODE MODIFICATION REQUEST message, or is carried in a new message, such as an S-NG-RAN node MDT Report message.

Information contained in the above message includes one or a combination of:
1. a measurement trace identifier (Trace ID);
2. a UE identifier (such as, M-NG-RAN node UE XnAP ID) allocated by the network element on the MN side;
3. a UE identifier (such as, S-NG-RAN node UE XnAP ID) allocated by the network element on the SN side;
4. a list of measured radio access bearers; or,
5. a list of measurement results based on radio access bearers.

Because the secondary base station outputs one measurement result at the end of each measurement period according to the configuration, the secondary base station may send multiple messages containing multiple measurement results to the main base station.

In operation 5, the main base station sends all measurement results to TCE. The main base station combines the measurement result on the secondary base station and the measurement result on the main base station, and sends the combined measurement result to the TCE together. The main base station may also send the measurement result of the secondary base station directly to the TCE without combining the measurement result of the secondary base station with the measurement result on the main base station.

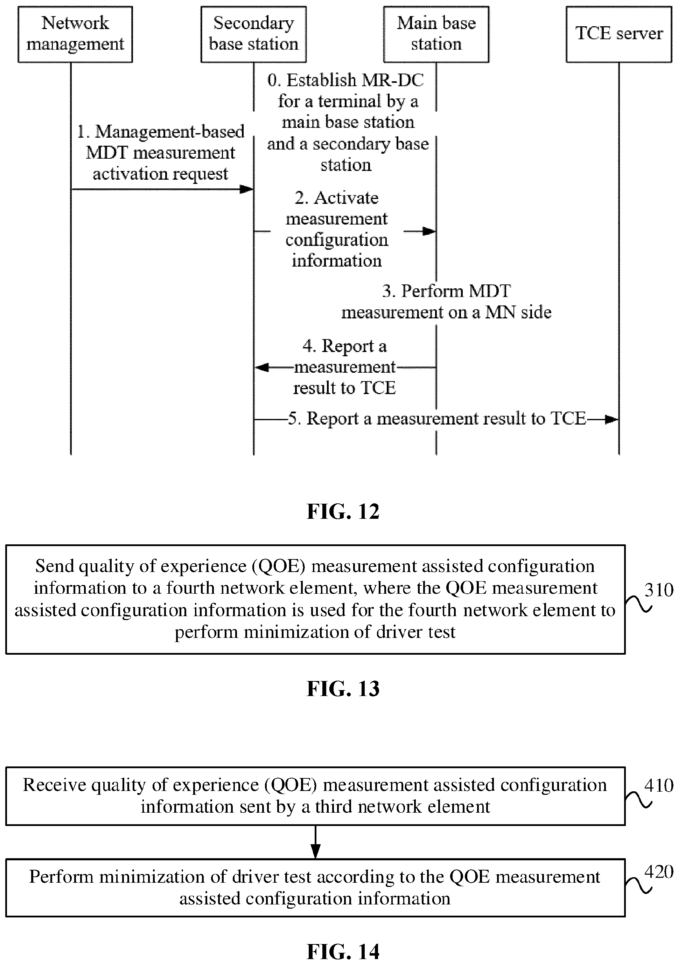

In an example embodiment, a measurement report of an MDT measurement is focused on being reported after a secondary base station node, and referring to FIG. 12, the MDT measurement includes following operations.

In operation 0, a main base station and a secondary base station establish a MR-DC for a terminal.

In the embodiments of the present application, the main base station sends a S-NODE ADDTITION REQUSET message carrying the SN terminated MCG bearer information through an Xn interface or an X2 interface, and the SN sends the S-NODE-RECONFIGURATION COMPLETE message to the MN after the SN has finished a configuration. The MN and the SN may establish an SN terminated MCG bearer for the terminal.

In operation 1, a network management of the SN sends a management-based MDT measurement activation request to the secondary base station. For example, the network management of the SN configures different configurations for management-based MDT measurement activation requests of the SN and the MN, respectively, due to that radio access technologies used by the SN and the MN may be different. Referring to FIG. 4, both MN and SN in MR-DC use NR, while referring to FIG. 3, the MN in the MR-DC uses EUTRA and the SN uses the NR. In a case shown in FIG. 3, the SN cannot provide MDT measurement configuration for the MN due to a fact that the SN uses a radio access technology different from that used by the MN. The network management of the SN needs to provide both measurement activation request configuration of NR-type and measurement activation request configuration of EUTRA-type for the SN.

An interface between a base station and the network management is used for the configuration, and the measurement configuration information configured by the SN may include following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI); and
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration; and
   4) a type of MDT measurement configuration, such as NR, EUTRA.

In operation 2, the secondary base station sends activation information for measurement configuration to the main base station. In the embodiments of the present application, after a management-based MDT measurement request is received, the secondary base station selects a terminal satisfying the condition to perform a measurement. When the secondary base station selects a terminal, it is determined that one radio bearer of the terminal is a type of a SN terminated MCG bearer, that is, a RLC of this one radio bearer is in a MN network element. Measurements required to be measured by the SN network management in this example are M5 and M7, both of which are performed at the RLC entity and are performed by the MN in this example. The secondary base station will thus send the activation information for measurement configuration to the main base station, to initiate the main base station to measure this radio access bearer.

An interface message used to transmit the activation information for measurement configuration may be a new XnAP or X2AP message such as an S-NG-RAN node initiated Trace start message, and may be an existing message such as an S-NODE MODIFICATION REQUIRED message, in both of which the activation information for measurement configuration is carried.

The measurement configuration information may include following parameters:
1. a measurement trace identifier (Trace ID) needing to be activated (including two parts, one part is a trace reference identifier, and one part is a trace recording session reference identifier);
2. a trace collection entity IP address, or, a trace collection entity uniform resource identifier (URI); and
3. MDT measurement configuration. The MDT measurement configuration includes following information:
   1) a measurement range, where the measurement range includes: a cell list, a tracking area list (TA list), a tracking area identifier list (TAI list), or a network slicing list;
   2) M5 measurement configuration;
   3) M7 measurement configuration; and
   4) a type of MDT measurement configuration, such as NR, EUTRA.

If the MN is accessed by using the NR, the SN transmits MDT measurement configuration information of NR-type obtained in operation 2 to the MN. If the MN uses EUTRA, the SN sends MDT measurement configuration information of EUTRA-type obtained in operation 2 to the MN.

In operation 3, the main base station performs an MDT measurement on a MN side. For example, after the main base station receives the message in the operation 2, the MN side performs the MDT measurement on the UE, for example, by using a TS38.314 protocol or a TS 28.552 protocol. The MN network element performs a measurement on M5, M7.

In operation 4, the main base station sends a measurement result to the secondary base station. An existing message may be also used to send the measurement result. For example, a result measured on the MN side is carried in an M-NODE MODIFICATION REQUEST message. A new message, such as M-NG-RAN node MDT Report, may also be used to carry the result measured on the MN side.

Information containing in the message includes one or a combination of:
1. a measurement trace identifier (Trace ID);
2. a UE identifier (such as, M-NG-RAN node UE XnAP ID) allocated by the network element on the MN side;
3. a UE identifier (such as, S-NG-RAN node UE XnAP ID) allocated by the network element on the SN side
4. a list of measured radio access bearers; or,
5. a list of measurement results based on radio access bearers.

Because the main base station outputs one measurement result at the end of each measurement period according to the configuration, and the main base station may send multiple messages containing multiple measurement results to the secondary base station.

In operation 5, the secondary base station sends all measurement results to TCE. The secondary base station combines the measurement results on the secondary base station and the main base station and then sends the combined measurement results to the TCE together. The secondary base station may also send the measurement result of the main base station directly to the TCE without being combined with the measurement result on the secondary base station.

A quality of experience (QOE) measurement is performed on the terminal side. The operator, when evaluating the quality of experience, often needs to provide the quality of service on the network side during a QOE measurement, to determine whether the degradation of the quality of experience is related to the quality of service on the terminal or the quality of service on the network side. The MDT measurement may serve as a measurement for assisting evaluation of QOE. The operator evaluates the quality of experience based on a report of the QOE measurement. Therefore, if the MDT measurement report and the QOE measurement report are not both on a same device, it is difficult for the operator to achieve a complete evaluation of the quality of experience. A measurement report for MDT is eventually sent by the base station to a TCE device, while a measurement report for QOE is eventually sent by the base station to a measurement collection entity (MCE) device, it is therefore necessary to send an MDT measurement result to the MCE device, where the MDT measurement result is used for assisting the evaluation of QOE. Secondly, in the existing art, the base station may support a split architecture, that is, one base station may be split into gNB-CU-CP, gNB-CU-UP, and gNB-DU, the three of which may independently perform an MDT measurement and independently report the measurement result to the TCE device. In the existing art, under a multi-connectivity architecture, the MDT measurement report of the main base station and the MDT measurement report of the secondary base station may also be independently sent to the TCE device. Therefore, it needs to address how to send the MDT measurement result for assisting the evaluation of QOE to the MCE device under the split architecture and the multi-connectivity architecture.

FIG. 13 is a flowchart of a method for minimization of driver test according to an embodiment of the present application, this embodiment is applicable to a situation of performing a minimization of driver test in an NR network, the method is executed by an apparatus for minimization of driver test in the embodiments of the present application, the apparatus is implemented in a form of software and/or hardware, and may generally be integrated in a third network element. Referring to FIG. 13, the method in this embodiment of the present application includes the operations as described below.

In operation 310, quality of experience (QOE) measurement assisted configuration information is sent to a fourth network element, where the QOE measurement assisted configuration information is used for the fourth network element to perform minimization of driver test.

In the embodiments of the present application, the quality of experience (QOE) measurement assisted configuration information may be generated by the third network element, and the QOE measurement assisted configuration information may be sent to a fourth network element, and the fourth network element performs a minimization of driver test including a QOE measurement according to the QOE measurement assisted configuration information.

In an embodiment, based on the above-described embodiments of the present application, the QOE measurement assisted configuration information includes at least one of: an activated or deactivated QOE measurement reference identifier; an activated or deactivated trace reference identifier; an internet protocol address of a measurement collection entity or a resource position of a measurement collection entity; a terminal identifier allocated by the third network element; a terminal identifier allocated by the fourth network element; a trace identifier of the minimization of driver test for an auxiliary QOE; or QOE configuration.

In an embodiment, based on the above-described embodiments of the present application, the QOE configuration includes at least one of following parameters: a measurement configuration container of an application layer; a measurement range; or a QOE service type.

FIG. 14 is another flowchart of a method for minimization of driver test according to an embodiment of the present application, this embodiment is applicable to a situation of performing a minimization of driver test in an NR network, the method is executable by an apparatus for minimization of driver test in the embodiments of the present application, the apparatus is implemented in a form of software and/or hardware, and may generally be integrated in a fourth network element. Referring to FIG. 14, the method in the embodiment of the present application includes the operations as described below.

In operation 410, quality of experience (QOE) measurement assisted configuration information sent by a third network element is received.

For example, the fourth network element may receive the QOE measurement assisted configuration information sent by the third network element.

In operation 420, a minimization of driver test is performed according to the QOE measurement assisted configuration information.

In the embodiments of the present application, the fourth network element triggers and performs a QOE measurement according to the QOE measurement assisted configuration information.

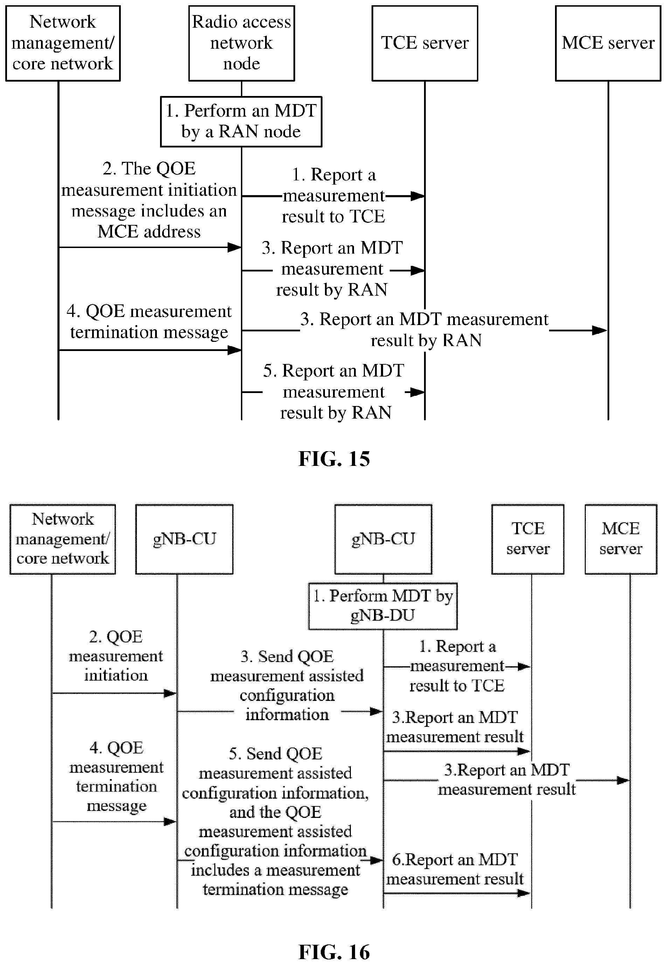

In an example embodiment, a base station sends an MDT measurement result for assisting the QOE measurement to an MCE. FIG. 15 is a schematic diagram of a method for minimization of driver test according to an embodiment of the present application. Referring to FIG. 15, performing the MDT measurement may include operations as described below.

In operation 1, the base station performs an MDT measurement and sends an MDT measurement result to a TCE server.

Before a UE receives QOE configuration, an MDT measurement for this UE has been performed. The base station sends an MDT measurement report to the TCE server.

In operation 2, a network management or a core network sends a QOE measurement initiation message to the base station.

If the QOE measurement is a management-based QOE measurement, the network management sends the QOE measurement initiation message to the base station through a northbound interface.

If the QOE measurement is a signaling-based QOE measurement, the network management sends the QOE measurement initiation message to the base station through the core network. The QOE measurement initiation message may be sent in an existing NG interface message.

The QOE measurement initiation message includes QOE measurement assisted configuration information.

The QOE measurement assisted configuration information includes one or a combination of the following parameters:
1. a QOE measurement reference identifier (QOE Reference or QMC ID) needing to be activated or deactivated;
2. a trace recording session reference identifier needing to be activated or deactivated;
3. an IP address of a measurement collection entity (MCE) or a resource position of an MCE (MCE URI);
4. a UE identifier allocated by a third network element (such as, M-NG-RAN node UE XnAP ID);
5. a UE identifier allocated by a fourth network element (such as, S-NG-RAN node UE XnAP ID);
6. a trace ID of an MDT of an auxiliary QOE; or,
7. QOE configuration; a QoE reference parameter specifies a network request session. The QoE reference should have global uniqueness, therefore it is composed as follows: mobile country code (MCC) + mobile network code (MNC) + Qoe Management Control (QMC) ID, where MCC and MNC together with a tracking activation request issued by a management system identify a public land mobile network (PLMN) containing the management system, and QMC ID is a 3-byte binary octet string. The QMC ID is generated by a network management system for identifying a QoE measurement acquisition task.

In operation 3, the base station sends the MDT measurement result to the MCE. The base station receives and saves a configuration and sends an MDT report to an MCE device. The base station may also send the MDT report to a TCE device. In this case, the same MDT measurement report is copied and is sent to both the TCE device and the MCE device.

In operation 4, the network management or the core network sends a QOE measurement termination message to the base station. The QOE measurement termination message contains the QOE measurement assisted configuration information, and the QOE measurement assisted configuration information includes one or a combination of the following parameters:
1. a deactivated QOE measurement reference identifier (QOE Reference or QMC ID);
2. a UE identifier allocated by a third network element (such as, M-NG-RAN node UE XnAP ID);
3. a UE identifier allocated by a fourth network element (such as, S-NG-RAN node UE XnAP ID); or
4. a trace ID of an MDT of an auxiliary QOE.

In operation 5, the base station terminates sending the MDT measurement result to the MCE.

In an example embodiment, a gNB-DU sends an MDT measurement result for assisting the QOE measurement to an MCE. FIG. 16 is a schematic diagram of a method for minimization of driver test according to an embodiment of the present application, and referring to FIG. 16, the method provided in the embodiment of the present application includes the following operations.

In operation 1, the gNB-DU performs an MDT measurement and sends an MDT measurement result to a TCE server.

For example, before a UE receives QOE configuration, an MDT measurement for this UE has been performed on the gNB-DU. The gNB-DU sends an MDT measurement report to the TCE server.

In operation 2, a network management or a core network sends a QOE measurement initiation message to a gNB-CU, where the QOE measurement initiation message includes QOE measurement assisted configuration information.

In operation 3, the gNB-CU sends the QOE measurement assisted configuration information to the gNB-DU. The gNB-CU sends the QOE measurement assisted configuration information to the gNB-DU through an F1 interface message. The gNB-DU receives and saves the QOE measurement assisted configuration information, and sends an MDT report to an MCE device. The gNB-DU may also send the MDT report to a TCE device. In this case, a same MDT measurement report is copied and is sent to both the TCE device and the MCE device.

In operation 4, the network management or the core network sends a QOE measurement termination message to the gNB-CU.

In operation 5, the gNB-CU sends the QOE measurement assisted configuration information to the gNB-DU, where the QOE measurement assisted configuration information includes an indication that QOE is terminated. The gNB-CU sends the QOE measurement assisted configuration information to the gNB-DU through an F1 interface message, and the gNB-DU terminates sending the MDT measurement result to the MCE.

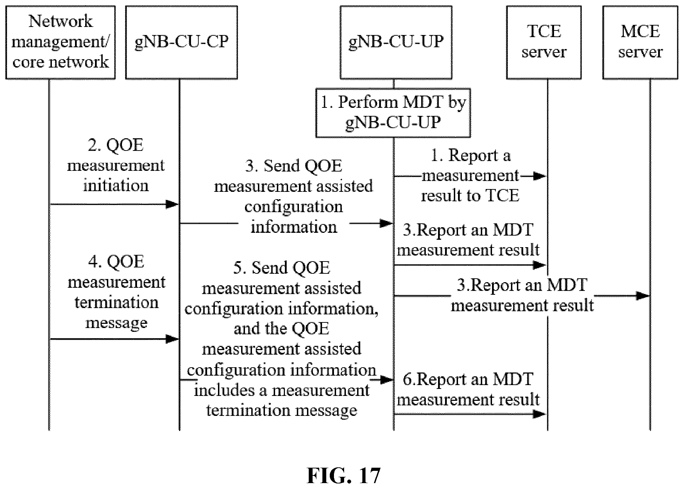

In an example embodiment, a gNB-CU-UP sends an MDT measurement result for assisting the QOE measurement to an MCE. FIG. 17 is a schematic diagram of a method for minimization of driver test according to an embodiment of the present application, and referring to FIG. 17, performing the MDT measurement includes the following operations.

In operation 1, the gNB-CU-UP performs the MDT measurement and sends an MDT measurement result to a TCE server.

Before a UE receives QOE configuration, an MDT measurement for this UE has been performed on the gNB-CU-UP. The gNB-CU-UP sends an MDT measurement report to the TCE server.

In operation 2, a network management or a core network sends a QOE measurement initiation message to a gNB-CU-CP, where the QOE measurement initiation message includes QOE measurement assisted configuration information.

In operation 3, the gNB-CU-CP sends the QOE measurement assisted configuration information to the gNB-CU-UP. The gNB-CU-CP sends the QOE measurement assisted configuration information to the gNB-CU-UP through an E1 interface message. The gNB-CU-UP receives and saves the QOE measurement assisted configuration information, and sends an MDT report to an MCE device. The gNB-CU-UP may also send the MDT report to a TCE device. In this case, a same MDT measurement report is copied and is sent to both the TCE device and the MCE device.

In operation 4, the network management or the core network sends a QOE measurement termination message to the gNB-CU-CP.

In operation 5, the gNB-CU-CP sends the QOE measurement assisted configuration information to the gNB-CU-UP, where the QOE measurement assisted configuration information includes an indication that QOE is terminated. The gNB-CU-CP sends the QOE measurement assisted configuration information to the gNB-CU-UP through an E1 interface message, and the gNB-CU-UP terminates sending the MDT measurement result to the MCE.

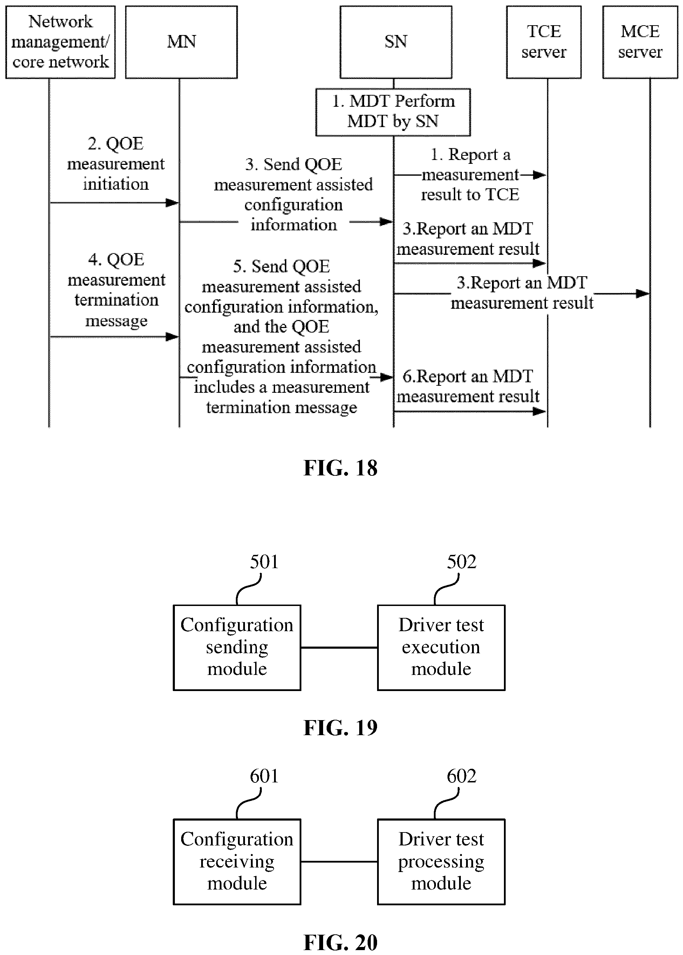

In an example embodiment, a SN sends an MDT measurement result for assisting the QOE measurement to an MCE. FIG. 18 is a schematic diagram of a method for minimization of driver test according to an embodiment of the present application, and referring to FIG. 18, performing the MDT measurement includes the following operations.

In operation 1, the SN performs the MDT measurement and sends an MDT measurement result to a TCE server. Before a UE receives QOE configuration, the UE has been configured with MR-DC, an MDT measurement for this UE has been performed on the SN. The SN sends an MDT measurement report to the TCE server.

In operation 2, a network management or a core network sends a QOE measurement initiation message to a MN, where the QOE measurement initiation message includes QOE measurement assisted configuration information.

In operation 3, the MN sends the QOE measurement assisted configuration information to the SN; the MN sends the QOE measurement assisted configuration information to the SN through an XN interface message. The SN saves the received configuration and sends an MDT report to an MCE device. The SN may also send the MDT report to a TCE device. In this case, a same MDT measurement report is copied and sent to both the TCE device and the MCE device.

In operation 4, the network management or the core network sends a QOE measurement termination message to the MN.

In operation 5, the MN sends the QOE measurement assisted configuration information to the SN, where the QOE measurement assisted configuration information includes an indication that QOE is terminated. The MN sends the QOE measurement assisted configuration information to the SN through an XN interface message, and the SN terminates sending the MDT measurement result to the MCE.

FIG. 19 is a schematic structural diagram of an apparatus for minimization of driver test according to an embodiment of the present application. The apparatus for minimization of driver test may perform the method for minimization of driver test provided in any of the embodiments of the present application, and have corresponding function modules and beneficial effects of the execution method. The apparatus may be implemented by software and/or hardware, typically integrated in a first network element, and the apparatus includes a configuration sending module 501 and a driver test execution module 502.

The configuration sending module 501 is configured to send measurement configuration information to a second network element, where the measurement configuration information is used for the second network element to perform minimization of driver test.

The driver test execution module 502 is configured to perform the minimization of driver test.

According to the embodiments of the present application, the first network element of the configuration sending module sends the measurement configuration information to the second network element, the first network element of the driver test execution module respectively performs the minimization of driver test, so that the minimization of driver test is implemented in an NR network, the accuracy of the driver test accuracy is improved, and thus the accurate control of a network node is implemented.

In an embodiment, based on the above-described embodiments of the present application, the measurement configuration information in the apparatus includes at least one of following parameters: an activated or deactivated measurement trace identifier; an activated or deactivated trace reference identifier; an activated or deactivated trace recording session reference identifier; a trace collection entity internet protocol address or a a trace collection entity uniform resource identifier; a terminal identifier allocated by the first network element; a terminal identifier allocated by the second network element; or minimization of driver test configuration.

In an embodiment, based on the above-described embodiments of the present application, the minimization of driver test configuration in the apparatus includes at least one of following parameters: a measurement range, where the measurement range includes at least one of: a cell list, a tracking area list, a tracking area identifier, or a network slicing list; uplink data volume measurement configuration and/or downlink data volume measurement configuration; average throughput rate measurement configuration; message delay measurement configuration; message loss rate measurement configuration; or a type of minimization of driver test measurement configuration.

FIG. 20 is a schematic structural diagram of an apparatus for minimization of driver test according to an embodiment of the present application. The apparatus for minimization of driver test may perform the method for minimization of driver test provided in any of the embodiments of the present application, and have corresponding function modules and beneficial effects of the execution method. The apparatus may be implemented by software and/or hardware, typically integrated in a second network element, and the apparatus includes a configuration receiving module 601 and a driver test processing module 602.

The configuration receiving module 601 is configured to receive measurement configuration information sent by a first network element.

The driver test processing module 602 is configured to perform a minimization of driver test according to the measurement configuration information.

In an embodiment, based on the above-described embodiments of the present application, the measurement configuration information in the apparatus includes at least one of following parameters: an activated or deactivated measurement trace identifier; an activated or deactivated trace reference identifier; an activated or deactivated trace recording session reference identifier; a trace collection entity internet protocol address or a a trace collection entity uniform resource identifier; a terminal identifier allocated by a network element on a master node side; a terminal identifier allocated by a network element on a service node side; or minimization of driver test configuration.

In an embodiment, based on the above-described embodiments of the present application, the minimization of driver test configuration in the apparatus includes at least one of following parameters: a measurement range, where the measurement range includes at least one of: a cell list, a tracking area list, a tracking area identifier, or a network slicing list; uplink data volume measurement configuration and/or downlink data volume measurement configuration; average throughput rate measurement configuration; message delay measurement configuration; message loss rate measurement configuration; or a type of minimization of driver test measurement configuration.

In an embodiment, based on the above-described embodiments of the present application, the apparatus further includes a result sending module. The result sending module is configured to send a measurement result of the minimization of driver test to a trace collection entity (TCE), where the measurement result of the minimization of driver test is used for the TCE to determine evaluation of the measurement result of the minimization of driver test for a terminal.

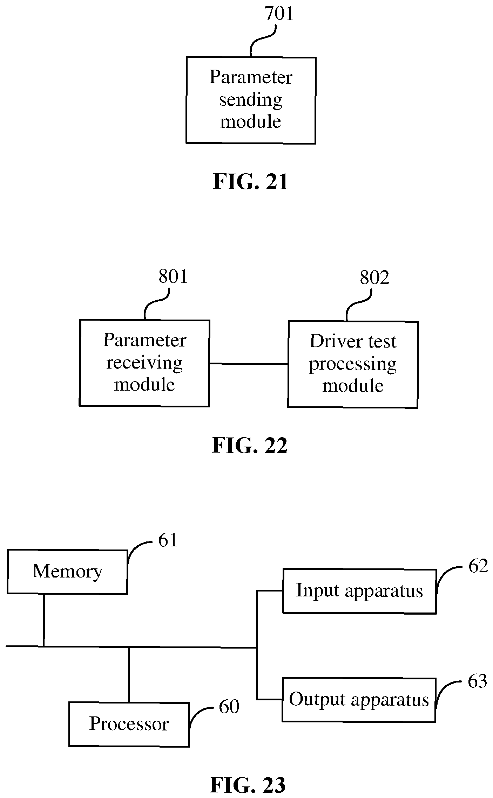

FIG. 21 is a schematic structural diagram of an apparatus for minimization of driver test according to an embodiment of the present application. The apparatus for minimization of driver test may perform the method for minimization of driver test provided in any of the embodiments of the present application, and have corresponding function modules and beneficial effects of the execution method. The apparatus may be implemented by software and/or hardware, typically integrated in a third network element, and the apparatus includes a parameter sending module 701.

The parameter sending module 701 is configured to send quality of experience (QOE) measurement assisted configuration information to a fourth network element, where the QOE measurement assisted configuration information is used for the fourth network element to perform minimization of driver test.

In an embodiment, based on the above-described embodiments of the present application, the QOE measurement assisted configuration information in the apparatus includes at least one of: an activated or deactivated QOE measurement reference identifier; an activated or deactivated trace reference identifier; an internet protocol address of a measurement collection entity or a resource position of a measurement collection entity; a terminal identifier allocated by the third network element; a terminal identifier allocated by the fourth network element; a trace identifier of the minimization of driver test for an auxiliary QOE; or QOE configuration.

In an embodiment, based on the above-described embodiments of the present application, the QOE configuration in the apparatus includes at least one of the following parameters: a measurement configuration container of an application layer; a measurement range; or a QOE service type.

FIG. 22 is a schematic structural diagram of an apparatus for minimization of driver test according to an embodiment of the present application. The apparatus for minimization of driver test may perform the method for minimization of driver test provided in any of the embodiments of the present application, and have corresponding function modules and beneficial effects of the execution method. The apparatus may be implemented by software and/or hardware, typically integrated in a fourth network element, and the apparatus includes a parameter receiving module 801 and a driver test processing module 802.

The parameter receiving module 801 is configured to receive quality of experience (QOE) measurement assisted configuration information sent by a third network element.

The driver test processing module 802 is configured to perform a minimization of driver test according to the QOE measurement assisted configuration information.

In an embodiment, based on the above-described embodiments of the present application, the apparatus further includes a result sending module. The result sending module is configured to send a measurement result of the minimization of driver test to a trace collection entity (TCE).

In an embodiment, based on the above-described embodiments of the present application, the QOE measurement assisted configuration information in the apparatus includes at least one of: an activated or deactivated QOE measurement reference identifier; an activated or deactivated trace reference identifier; an internet protocol address of a measurement collection entity or a resource position of a measurement collection entity; a terminal identifier allocated by the third network element; a terminal identifier allocated by the fourth network element; a trace identifier of the minimization of driver test for an auxiliary QOE; or QOE configuration.

In an embodiment, based on the above-described embodiments of the present application, the QOE configuration includes at least one of following parameters: a measurement configuration container of an application layer; a measurement range; or a QOE service type.

FIG. 23 is a schematic structural diagram of an electronic device according to an embodiment of the present application. The electronic device includes a processor 60, a memory 61, an input apparatus 62 and an output apparatus 63. A number of processors 60 in the electronic device may be one or more, one processor 60 is taken as an example in FIG. 23; the processor 60, the memory 61, the input apparatus 62 and the output apparatus 63 in the electronic device may be connected by a bus or otherwise, and they being connected by the bus is taken as an example in FIG. 23.

The memory 61 serves as a computer-readable storage medium and may be used for storing a software program, a computer executable program and a module, such as a module corresponding to the apparatus for minimization of driver test in the embodiments of the present application (the configuration sending module 501 and the driver test execution module 502, or the configuration receiving module 601 and the driver test processing module 602, or the parameter sending module 701, or the parameter receiving module 801 and the driver test processing module 802). The processor 60 executes various functional applications and data processing of the electronic device, i.e., implements the method for minimization of driver test described above, by executing software programs, instructions, and modules stored in the memory 61.

The memory 61 may mainly include a storage program region and a storage data region, where the storage program region may store an operating system, an application program required for at least one function; and the storage data region may store data or the like created according to the use of the electronic device. Moreover, the memory 61 may include a high-speed random access memory and may also include a non-volatile memory, such as at least one magnetic disk storage device, flash memory device, or other non-volatile solid-state memory devices. In some instances, the memory 61 may further include a memory remotely disposed with respect to the processor 60, the remote memory may be connected to the electronic device over a network. Instances of such networks include, but are not limited to, an Internet, an intranet, a local area network, a mobile communication network, and combinations thereof.

The input apparatus 62 may be used for receiving entered numeric or character information and generating a key signal input related to user settings and function controls of the electronic device. The output apparatus 63 may include a display device such as a display screen.

An embodiment of the present application further provides a storage medium including a computer-executable instruction, where the computer-executable instruction is configured to perform, when executed by a computer processor, the method for minimization of driver test. The method includes described below. measurement configuration information is sent to a second network element, where the measurement configuration information is used for the second network element to perform minimization of driver test; and the minimization of driver test is performed. Or, measurement configuration information sent by a first network element is received; and a minimization of driver test is performed according to the measurement configuration information. Or, quality of experience (QOE) measurement assisted configuration information is sent to a fourth network element, where the QOE measurement assisted configuration information is used for the fourth network element to perform minimization of driver test. Or, quality of experience (QOE) measurement assisted configuration information sent by a third network element is received; and a minimization of driver test is performed according to the QOE measurement assisted configuration information.

The storage medium may be a non-transitory storage medium.

Those skilled in the art will appreciate from the above description of the implementation manners that the present application may be implemented by means of software and general purpose hardware, and of course may also be implemented by hardware, but in many cases the former is a better implementation manner. Based on this understanding, the technical scheme of the present application, either essentially or in terms of contributions to the existing art, may be embodied in the form of a software product, and the computer software product may be stored in a computer readable storage medium, such as a floppy disk of a computer, a read-only memory (ROM), a random access memory (RAM), a flash memory (FLASH), a hard disk or an optional disk, including multiple instructions to enable a computer device (which may be a personal computer, a server, or a network device, etc.) to perform the method of any of the embodiments of the present application.

It is worth noting that in the above embodiments of the apparatus, the units and modules included in the apparatus are only divided according to the function logic and are not limited to the above division, as long as the corresponding functions may be implemented; in addition, the specific name of each function unit is also merely to facilitate distinguishing from each other and is not intended to limit the scope of protection of the present application.

It should be understood by those of ordinary skill in the art that all or some of the processes of the methods, systems, and function modules/units in the devices disclosed above may be implemented as software, firmware, hardware, and suitable combinations thereof.

In a hardware implementation, the division between function modules/units mentioned in the above description does not necessarily correspond to the division of physical assemblies; for example, one physical component may have multiple functions or one function or process may be performed by several physical assemblies in cooperation. Some or all of the assemblies may be implemented as software executed by a processor, such as a central processing unit, a digital signal processor or a microprocessor, or as hardware, or as an integrated circuit such as an application specific integrated circuit. Such software may be allocated on computer-readable media, which may include computer storage media (or non-transitory media) and communication media (or transitory media). The term "computer storage media" includes volatile and nonvolatile, removable and non-removable media implemented in any method or technology for storage of information (such as computer-readable instructions, data structures, program modules or other data). The computer storage media include, but are not limited to, a RAM, a ROM, an electrically erasable programmable read-only memory (EEPROM), a flash memory or other memory technology, a CD-ROM, a digital video disc (DVD), or other optical disk storage, a magnetic cassette, a magnetic tape, a magnetic disk storage or other magnetic storage devices, or any other medium which may be used for storing the desired information and which may be accessed by a computer. Further, as is well known to those of ordinary skill in the art, the communication media typically embodies a computer-readable instruction, a data structure, a program module, or other data in a modulated data signal such as a carrier wave or other transport mechanism, and may include any information delivery media.

The embodiments of the present application have been described above with reference to the accompanying drawings, and do not limit the scope of the claims of the present application. Any modifications, equivalents, and improvements made by those skilled in the art without departing from the scope and spirit of the present application should be within the scope of the claims of the present application.

## Claims

1. A method for minimization of driver test (MDT), implemented by a first network element, comprising:
sending measurement configuration information to a second network element, wherein the measurement configuration information is used for the second network element to perform minimization of driver test; and
performing minimization of driver test.

2. The method of claim 1, wherein the measurement configuration information comprises at least one of:
an activated or deactivated measurement trace identifier;
an activated or deactivated trace reference identifier;
an activated or deactivated trace recording session reference identifier;
a trace collection entity internet protocol address or a trace collection entity uniform resource identifier;
a terminal identifier allocated by the first network element;
a terminal identifier allocated by the second network element; or
minimization of driver test configuration.

3. The method of claim 2, wherein the minimization of driver test configuration comprises at least one of:
a measurement range, wherein the measurement range comprises at least one of: a cell list, a tracking area list, a tracking area identifier, or a network slicing list;
at least one of uplink data volume measurement configuration or downlink data volume measurement configuration;
average throughput rate measurement configuration;
message delay measurement configuration;
message loss rate measurement configuration; or
a type of minimization of driver test measurement configuration.

4. The method of claim 1, further comprising:
sending a measurement result of the minimization of driver test to a trace collection entity (TCE), wherein the measurement result of the minimization of driver test is used for the TCE to determine evaluation of the measurement result of the minimization of driver test for a terminal.

5. A method for minimization of driver test, implemented by a second network element, comprising:
receiving measurement configuration information sent by a first network element; and
performing minimization of driver test according to the measurement configuration information.

6. The method of claim 5, wherein the measurement configuration information comprises at least one of:
an activated or deactivated measurement trace identifier;
an activated or deactivated trace reference identifier;
an activated or deactivated trace recording session reference identifier;
a trace collection entity internet protocol address or a trace collection entity uniform resource identifier;
a terminal identifier allocated by a network element on a master node side;
a terminal identifier allocated by a network element on a service node side; or
minimization of driver test configuration.

7. The method of claim 6, wherein the minimization of driver test configuration comprises at least one of:
a measurement range, wherein the measurement range comprises at least one of: a cell list, a tracking area list, a tracking area identifier, or a network slicing list;
at least one of uplink data volume measurement configuration or downlink data volume measurement configuration;
average throughput rate measurement configuration;
message delay measurement configuration;
message loss rate measurement configuration; or
a type of minimization of driver test measurement configuration.

8. The method of claim 5, further comprising:
sending a measurement result of the minimization of driver test to a trace collection entity (TCE), wherein the measurement result of the minimization of driver test is used for the TCE to determine evaluation of the measurement result of the minimization of driver test for a terminal.

9. An apparatus for minimization of driver test, applied to a first network element, comprising:
a configuration sending module, which is configured to send measurement configuration information to a second network element, wherein the measurement configuration information is used for the second network element to perform minimization of driver test; and
a driver test execution module, which is configured to perform minimization of driver test.

10. An apparatus for minimization of driver test, applied to a second network element, comprising:
a configuration receiving module, which is configured to receive measurement configuration information sent by a first network element; and
a driver test processing module, which is configured to perform minimization of driver test according to the measurement configuration information.

11. A method for minimization of driver test, implemented by a third network element, comprising:
sending quality of experience (QOE) measurement assisted configuration information to a fourth network element, wherein the QOE measurement assisted configuration information is used for the fourth network element to perform minimization of driver test.

12. The method of claim 11, wherein the QOE measurement assisted configuration information comprises at least one of:
an activated or deactivated QOE measurement reference identifier;
an activated or deactivated trace reference identifier;
an internet protocol address of a measurement collection entity or a resource position of a measurement collection entity;
a terminal identifier allocated by the third network element;
a terminal identifier allocated by the fourth network element;
a trace identifier of minimization of driver test for an auxiliary QOE; or
QOE configuration.

13. The method of claim 12, wherein the QOE configuration comprises at least one of:
a measurement configuration container of an application layer;
a measurement range; or
a QOE service type.

14. A method for minimization of driver test, implemented by a fourth network element, comprising:
receiving quality of experience (QOE) measurement assisted configuration information sent by a third network element; and
performing minimization of driver test according to the QOE measurement assisted configuration information.

15. The method of claim 14, further comprising:
sending a measurement result of the minimization of driver test to a measurement collection entity (MCE).

16. The method of claim 14, further comprising:
sending a measurement result of the minimization of driver test to an MCE and a trace collection entity (TCE).

17. The method of any one of claims 14 to 16, wherein the QOE measurement assisted configuration information comprises at least one of:
an activated or deactivated QOE measurement reference identifier;
an activated or deactivated trace reference identifier;
an internet protocol address of a measurement collection entity or a resource position of a measurement collection entity;
a terminal identifier allocated by the third network element;
a terminal identifier allocated by the fourth network element;
a trace identifier of the minimization of driver test for an auxiliary QOE; or
QOE configuration.

18. The method of claim 17, wherein the QOE configuration comprises at least one of:
a measurement configuration container of an application layer;
a measurement range; or
a QOE service type.

19. An apparatus for minimization of driver test, applied to a third network element, comprising:
a parameter sending module, which is configured to send quality of experience (QOE) measurement assisted configuration information to a fourth network element, wherein the QOE measurement assisted configuration information is used for the fourth network element to perform minimization of driver test.

20. An apparatus for minimization of driver test, applied to a fourth network element, comprising:
a parameter receiving module, which is configured to receive quality of experience (QOE) measurement assisted configuration information sent by a third network element; and
a driver test processing module, which is configured to perform minimization of driver test according to the QOE measurement assisted configuration information.

21. An electronic device, comprising:
one or more processors; and
a memory, which is configured to store one or more programs;
wherein the one or more programs, when executed by the one or more processors, cause the one or more processors to implement the method for minimization of driver test of any one of claims 1 to 4, 5 to 8, 11 to 13, and 14 to 18.

22. A computer-readable storage medium, storing a computer program, wherein the computer program, when executed by a processor, implements the method for minimization of driver test of any one of claims 1 to 4, 5 to 8, 11 to 13, and 14 to 18.
